# EUROPEAN PATENT SPECIFICATION

(11) **EP 2 342 285 B1**
(45) Date of publication and mention of the grant of the patent: **13.08.2014**
(21) Application number: 10739993.3
(22) Date of filing: 08.06.2010
(51) Int. Cl.: C09D 5/00

(54) **MINERAL BLENDS FOR LOW-TITANIA COATINGS**
MINERALGEMISCHE FÜR BESCHICHTUNGEN MIT GERINGEM TITANGEHALT
MÉLANGE DE MINÉRAUX POUR DES REVÊTEMENTS À FAIBLE TENEUR EN DIOXYDE DE TITANE

(30) Priority: 08.06.2009 US 185108 P
(43) Date of publication of application: 13.07.2011
(73) Proprietor: Imerys Minerals Limited, Par. Cornwall PL24 2SQ (GB)
(72) Inventor: GITTINS, David, Buellton California 93427 (US); GADSDON, Martyn, Truro TR4 9PL (GB); SKUSE, David, Truro Cornwall TR1 1BH (GB)
(74) Representative: Rushton, David John
(86) International application number: PCT/IB2010/001485
(87) International publication number: WO 2010/143068

(56) References cited:
- EP-A1- 1 469 045
- EP-A2- 1 980 595
- WO-A2-02/44286
- WO-A2-2005/052066
- DE-A1- 19 849 330
- DE-A1-102005 032 346
- US-A1- 2004 109 853
- US-A1- 2004 110 870
- US-A1- 2007 116 879

## Description

### CLAIM OF PRIORITY

This PCT International Application claims the right of priority to U.S. Provisional Patent Application No. 61/185,108, filed June 8, 2009, and also claims the benefits of any rights of priority that may be available to that application.

### FIELD OF THE INVENTION

The present disclosure relates to enhancing the opacity of coatings that contain a relatively low level of titanium dioxide via use of kaolin and alkaline earth metal carbonate blends.

### BACKGROUND OF THE INVENTION

Coatings such as, for example, paints (oil- and water-based paints), sealants, architectural coatings, and industrial coatings (e.g., coatings other than paper coatings), may be used to improve the visual characteristics of a substrate and/or protect a substrate. Titanium dioxide (TiO₂) may be used as a filler or pigment for coating compositions due to its advantageous scattering and opacifying characteristics. However, titanium dioxide is expensive, and thus, it may be desirable to replace some or all of the titanium dioxide in such coating compositions in order to reduce costs. In addition, increased concern over global warming and greenhouse gases has led to increased customer demand for products having a lower carbon footprint. Titanium dioxide has a relatively high carbon footprint, and thus, it may be desirable to reduce the quantity of titanium dioxide used in coatings such as paints, thereby providing production of more environmentally friendly coatings.

Titanium dioxide may be used as a broadband and high efficiency optical scattering pigment to provide opacity in paint films and other coatings. This may allow for a reduced thickness of paints and other coatings, while still providing desired opacity and hiding capability. However, as levels of titanium dioxide in paints or other coatings are reduced, the opacity and hiding capability of the paint film may be adversely affected. This may result in the need to apply thicker coats of paint or extra coats of paint to effectively cover a substrate, which may result in offsetting some or all of the relative benefits of reducing the titanium dioxide content.

Thus, it may be desirable to provide coating compositions that permit reduced titanium dioxide content, while still providing effective coating of substrates.

EP 1980595 A2 relates to a water dilutable, alkyd resin based filling paste for substrates to be varnished.

US 2007/116879 A1 relates to a coating composition, for example a decorative effect coating composition capable of producing a multi-colored and/or multi-shaded appearance in a single application.

DE 10 2005 032346 A1 relates to coated pearlescent pigments wherein the coating covers the pearlescent pigments and comprises uncured, but chemically cross-linkable and/or oligomeric and/or polymeric binding agent(s) that can be cross-linked by heat, IR radiation, UV radiation and/or electron rays.

WO 2005/052066 A2 relates to a composition comprising pulverized hydrous kaolins having a specified particle size distribution.

EP 1469045 A1 relates to a fuel tank for a motor vehicle whose inner face is processed with an inorganic coating agent comprising (A) fine particles carrying silver and/or copper and (B) inorganic fine particles.

US 2004/109853 A1 relates to coatings and paints comprising a biomolecule composition, wherein the biomolecule composition comprises a phosphoric triester hydrolase.

US 2004/110870 A1 relates to a fire protection coating composition and method of using the same on substrate materials.

WO 02/44286 A2 relates to a waterborne coating composition prepared from liquid blend raw materials, such as titanium dioxide slurries, extender pigment slurries, thickener slurries, glycol slurries, and latex binders.

DE 19849330 A1 relates to a thermal insulating sheet comprising a base coated on both sides.

### SUMMARY OF THE INVENTION

The present invention is defined in and by the appended claims. In the following description, certain aspects and embodiments will become evident. It should be understood that the aspects and embodiments, in their broadest sense, could be practiced without having one or more features of these aspects and embodiments. It should be understood that these aspects and embodiments are merely exemplary.

One aspect of the disclosure relates to a coating composition including a coating vehicle, kaolin having a d₅₀ of not more than 2 microns, alkaline earth metal carbonate having a d₅₀ of not more than 2 microns, and less than 8% by weight titanium dioxide relative to the weight of the coating composition. As used herein, the term "coating vehicle" refers to the liquid components of a coating composition, such as, for example, solvents, binders, and other additives, such as, for example, dispersants, thickeners, defoamers, biocides, and the like.

The disclosure enables a method for improving opacity of a coating composition including adding kaolin and alkaline earth metal carbonate to the coating composition. The kaolin has a d₅₀ of not more than 2 microns, the alkaline earth metal carbonate has a d₅₀ of not more than 2 microns, and the coating composition includes less than 8% by weight titanium dioxide relative to the weight of the coating composition.

The disclosure enables a method for reducing titanium dioxide content of a coating composition and at least substantially maintaining opacity of the coating. The method may include adding fine kaolin and fine alkaline earth metal carbonate to the coating composition, wherein a volume concentration ratio of the fine kaolin to the fine alkaline earth metal carbonate ranges between 0.5:1 and 10:1.

Exemplary objects and advantages of the invention will be set forth in part in the description which follows, or may be learned by practice of the exemplary embodiments. It is to be understood that both the foregoing general description and the following detailed description are exemplary and explanatory only and are not restrictive of the invention, as claimed.

The accompanying drawings, which are incorporated in and constitute a part of this specification, illustrate exemplary embodiments of the invention and together with the description, may serve to explain some principles of the invention.

### BRIEF DESCRIPTION OF THE FIGURES

Figure 1 is a graph of opacity (%) vs. kaolin-carbonate concentration (% volume concentration) for TiO₂ at 0%, 3.5%, 10%, and 15% volume concentration, where the alkaline earth metal carbonate includes an exemplary ground calcium carbonate (GCC);
Figure 2 is a graph of Lightness (L) vs. volume ratio of exemplary blends of fine kaolin and exemplary alkaline earth metal carbonate; and
Figure 3 is a graph of Yellowness (b) vs. volume ratio of exemplary blends of fine kaolin and exemplary alkaline earth metal carbonate.

### DESCRIPTION OF EXEMPLARY EMBODIMENTS

Compositions according to exemplary aspects of the disclosure may allow inorganic particulate materials, and, particularly, blends of kaolin (e.g., hydrous kaolin) and alkaline earth metal carbonate (e.g., hydrous alkaline earth metal carbonate) to be employed as an extender in coatings, such as, for example, paint compositions, to provide an opacity which approaches, matches, or even exceeds that which may be achieved using more expensive extenders, such as, for example, calcined and/or chemically aggregated kaolins. Furthermore, this opacity improvement may be obtained without other disadvantages sometimes associated with the use of calcined and/or chemically aggregated kaolins.

Particle size characteristics described herein are measured via sedimentation of the particulate material in a fully dispersed condition in an aqueous medium using a Sedigraph 5100 particle size analyzer, supplied by Micromeritics Instruments Corporation, Norcross, Georgia, USA. The Sedigraph 5100 provides measurements and a plot of the cumulative percentage by weight of particles having a size, referred to in the art as the "equivalent spherical diameter" (esd).

According to some exemplary embodiments, fine kaolin and fine alkaline earth metal carbonate blends may be used to enhance opacity of dry coatings containing a low level of titanium dioxide. The coating formulation may contain less than 8% titanium dioxide, such as less than about 6%, such as less than about 4%, such as less than about 2%, or even about 0%, and a fine kaolin to fine calcium carbonate volume concentration ratio ranging between about 0.5:1 and about 10:1, such as, for example, ranging between about 0.7:1 to about 5:1, or about 1:1 to about 3:1.

According to some embodiments, the fine kaolin may include, or constitute, a fine kaolin composition, such as, for example, that marketed by Imerys Minerals Ltd. under the trade name SUPREME™. SUPREME™ has a particle size of 77% less than 1 micron.

Further, according to some embodiments, alkaline earth metal carbonate may include, for example, one or more of precipitated calcium carbonate (PCC), ground calcium carbonate (GCC), dolomite, limestone, chalk, marble, barium carbonate, magnesium carbonate, and other alkaline earth metal carbonates known to those skilled in the art. For example, the alkaline earth metal carbonate may include, or constitute, a fine calcium carbonate composition marketed by Imerys Minerals Ltd. under the trade name CARBOPAQUE™. CARBOPAQUE™ has a particle size of 94% less than 2 microns and a mean particle size of 0.7 micron.

According to some embodiments, the fine kaolin component may have a top particle size (d₉₀) of less than about 5 microns (µm), such as, for example, less than about 2 µm. According to some embodiments, the fine kaolin component may have a median particle size (d₅₀) of less than about 2 µm, such as, for example, less than about 1 µm, such as less than about 0.75 µm, such as less than about 0.5 µm. According to some embodiments, the fine kaolin component may have a median particle size (d₅₀) ranging from about 0.1 µm to about 1 µm, such as, for example, from about 0.25 µm to about 0.75 µm, such as from about 0.3 µm to 0.5 µm. According to some embodiments, the fine kaolin component may have a steepness (defined as d₃₀/d₇₀ x 100) ranging from about 35 to about 60, such as, for example, from about 40 to about 50, such as from about 45 to 50.

According to some embodiments, the alkaline earth metal carbonate (e.g., a fine alkaline earth metal carbonate, such as, for example, fine GCC) may have a top particle size (d₉₀) of less than about 5 µm, such as, for example, less than about 2 µm. In another aspect, the alkaline earth metal carbonate component may have a median particle size (d₅₀) of less than about 2 µm, such as, for example, less than about 1 µm, such as less than about 0.75 µm, such as less than about 0.5 µm. In a further embodiment, the alkaline earth metal carbonate (e.g., GCC) may have a median particle size (d₅₀) ranging from about 0.1 µm to about 1 µm, such as, for example, from about 0.25 µm to about 0.75 µm, such as from about 0.3 microns to 0.5 microns. According to some embodiments, the alkaline earth metal carbonate may include one or more of PCC, GCC, dolomite, limestone, chalk, marble, barium carbonate, magnesium carbonate, and other alkaline earth metal carbonates known to those skilled in the art.

According to some embodiments, the alkaline earth metal carbonate (e.g., a fine alkaline earth metal carbonate) may have a steepness (defined as d₃₀/d₇₀ x 100) ranging from 20 to 80. According to some embodiments, the alkaline earth metal carbonate may include GCC (including, for example, marble, chalk, dolomite and/or limestone) having a steepness ranging from about 20 to about 40, such as, for example, from about 25 to about 35, such as from about 30 to about 35. According to some embodiments, the alkaline earth metal carbonate may include GCC (including, for example, marble, chalk, dolomite and/or limestone) having a steepness ranging from about 40 to about 50, such as, for example, from about 40 to 55. According to some embodiments, the alkaline earth metal carbonate may include PCC having a steepness ranging from about 40 to about 60, such as, for example, from about 50 to about 60.

According to some embodiments, blends of fine kaolin and alkaline earth metal carbonate may be added to the composition as dry components and/or in slurry form. For example, if added in slurry form, the exemplary blend could comprise or constitute between about 30% and about 80% by weight of the composition, such as, for example, between about 65% and about 75% by weight, such as about 70% by weight.

According to some embodiments, the fine kaolin may have an oil absorption ranging from between about 20 g/100g and about 100 g/100g, such as, for example, between about 40 g/100g and about 60 g/100g, such as between about 45 g/100g and about 50 g/100g. According to some embodiments, the alkaline earth metal carbonate may have an oil absorption ranging between about 10 g/100g and about 40 g/100g, such as, for example, between about 15 g/100g and about 30 g/100g, such as between about 18 g/100g and about 25 g/100g. For example, according to some embodiments, a dry blend of fine kaolin and alkaline earth metal carbonate may have an oil absorption ranging between about 20 g/100g and about 100 g/100g, such as, for example, between about 25 g/100g and about 50 g/100g, such as between about 30 g/100g and about 40 g/100g.

According to some embodiments, a matting agent may be included in the blend of fine kaolin and alkaline earth metal carbonate. For example, a matting agent marketed by World Minerals under the trade name OPTIMAT™ (e.g., OPTIMAT 2550™), a matting agent that includes perlite, may be added to the blend. For example, the matting agent may range from about 0.1% to about 5% by weight of the coating composition, such as for example, from about 0.1 % to about 3% by weight, for example, from about 0.1% to about 2% by weight (e.g., about 2% by weight).

It is hypothesized by the inventors that for coatings, such as, for example, paints, as titanium dioxide levels are reduced to, for example, less than 10% by weight of the paint composition, the efficiency of scattering from air voids becomes more important. The efficiency of optical scattering provided by the air voids may be related to the size and/or shape of the air voids, as well as their number and/or density. Therefore, it is believed that by manipulating, for example, controlling and/or optimizing, the size of the air voids, their scattering efficiency may be improved (e.g., optimized) and/or the coating (e.g., paint) may achieve an improved (e.g., optimum) opacity for a given pigment volume concentration (PVC).

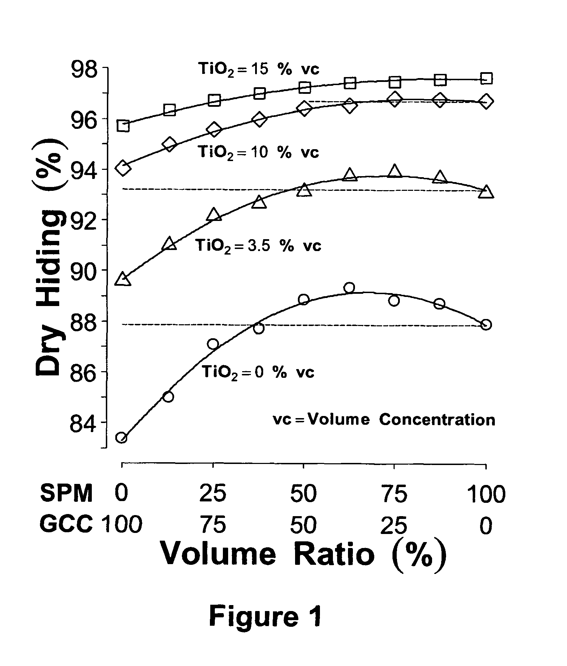

It is hypothesized by the inventors that fine kaolin particles in coatings, such as, for example, paint films, may act as effective spacers for titanium dioxide particles, thereby possibly increasing the scattering efficiency of a titanium dioxide pigment. For example, Figure 1 shows the effective spacing of kaolin with respect to a fine carbonate, which is generally believed to space titanium dioxide (TiO₂) poorly, by plotting the opacity (i.e., where 100% opacity is completely opaque and 0% opacity is completely transparent) as a function of the relative proportions of two mineral extenders-kaolin and calcium carbonate. Figure 1 is plotted for a constant total pigment volume concentration (PVC) of 73.52%, with 60.32% of this comprising titanium dioxide, kaolin, and calcium carbonate particles, with Figure 1 showing the results for a titanium dioxide level equaling 0%, 3.5%, 10% and 15% by weight. As shown in Figure 1, the kaolin particles appear to be acting as an efficient spacer for the titanium dioxide particles, for example, because the opacity gradually increases as the relative proportion of kaolin particles increases. As may be deduced from Figure 1, there may be a synergistic effect between the fine kaolin particles and the fine alkaline earth metal carbonate particles that improves (e.g., optimizes) the size distribution of the air voids, such that the paint film is more opaque for an appropriate ratio of the two mineral extenders than for either of the pure kaolin or pure carbonate formulations.

Thus, according to some exemplary embodiments, fine kaolin and fine alkaline earth metal carbonate (e.g., calcium carbonate) blends may be used to enhance the opacity of a dry coating that contains a low level of titanium dioxide. For example, there may be a synergistic response between fine kaolin and fine carbonate that may be relatively stronger at lower titanium dioxide levels (e.g., zero percent) than in "typical" paint formulations and/or other coating formulations.

The Table below provides the composition of the paint tested for which the results are shown in Figure 1 for the formulation in which the titanium dioxide has a volume concentration of 0%.

**TABLE**

| | | **Weight** % | |
|---|---|---|---|
| Fine kaolin | | 23.82 | |
| Fine CC | | 14.73 | |
| Optimat 2550 (perlite-based matting agent) | | 2.02 | |
| Luzenac OXO (talc) | | 6.19 | |
| | | | |
| Natrosol 250MR (thickener) | | 0.34 | |
| 28% Ammonia Solution | | 0.10 | |
| Dispex N40 (dispersant) | | 0.47 | |
| Foamaster NDW (defoamer) | | 0.15 | |
| Water | | 38.89 | |
| Mowilith LDM 1871 (binder) | | 13.09 | |
| Rocima 564 (biocide) | | 0.19 | |
| Total | | 100.00 | |
| | | | |
| % Solids | 54.41 | Vol. Solids | 34.99 |
| Paint SG (g/cm³) | 1.424 | TiO2vc | 0.00 |
| | | Fine kaolin vc | 37.70 |
| | | Fine CC vc | 22.62 |
| | | Luzenac vc | 9.19 |
| | | O'mat 2550 vc | 4.00 |
| | | "blend" pvc | 60.31 |
| | | TOTAL pvc | 73.51 |

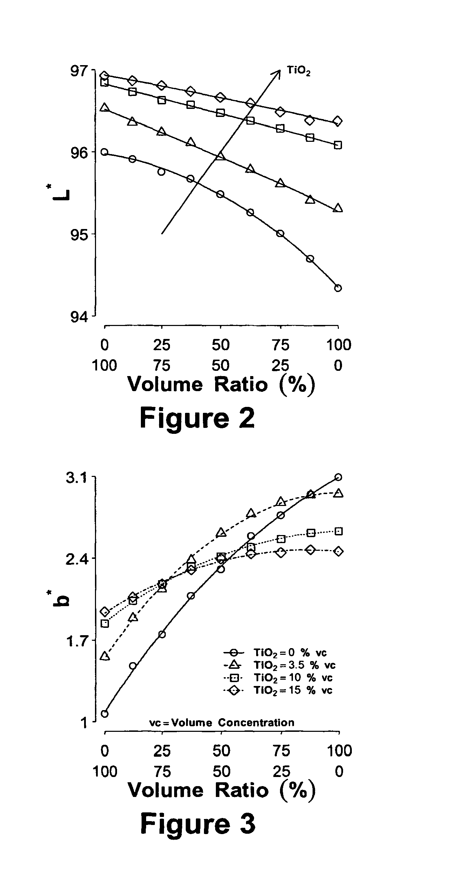

Referring to Figure 2, it shows a graph of the effects on Whiteness (L) of an exemplary paint composition at different blend ratios of fine kaolin to carbonate. Figure 4 shows a graph of the effects on Yellowness (b) of an exemplary paint composition at different blend ratios of fine kaolin to carbonate. As shown in Figures 2 and 3, adding relatively more carbonate increases Whiteness, and adding relatively more kaolin increases Yellowness.

Other embodiments of the invention will be apparent to those skilled in the art from consideration of the specification and practice of the exemplary embodiments disclosed herein. It is intended that the specification and examples be considered as exemplary only, with a true scope of the invention being indicated by the following claims.

## Claims

1. A paint or architectural coating composition comprising:
a coating vehicle;
kaolin having a d₅₀ of not more than 2 microns;
alkaline earth metal carbonate having a d₅₀ of not more than 2 microns; and
less than 8% by weight titanium dioxide relative to the weight of the composition.

2. The composition of claim 1, wherein the alkaline earth metal carbonate comprises at least one of calcium carbonate, dolomite, limestone, chalk, marble, barium carbonate, and magnesium carbonate.

3. The composition of claim 2, wherein the alkaline earth metal carbonate comprises calcium carbonate.

4. The composition of claim 1, wherein the composition comprises less than about 6% by weight titanium dioxide relative to the weight of the composition.

5. The composition of claim 1, wherein the kaolin has a d₉₀ of less than 5 microns.

6. The composition of claim 1, wherein the kaolin has a d₉₀ of less than 2 microns.

7. The composition of claim 1, wherein the kaolin has a d₅₀ of less than 1 micron.

8. The composition of claim 1, wherein the kaolin has a d₅₀ less than 0.5 micron.

9. The composition of claim 1, wherein the alkaline earth metal carbonate has a d₉₀ of less than 5 microns.

10. The composition of claim 1, wherein the alkaline earth metal carbonate has a d₉₀ of less than 2 microns.

11. The composition of claim 1, wherein the alkaline earth metal carbonate has a d₅₀ of less than 1 micron.

12. The composition of claim 1, wherein the alkaline earth metal carbonate has a d₅₀ less than 0.5 micron.

13. The composition of claim 1, wherein the alkaline earth metal carbonate has a steepness ranging from 20 to 40.

14. The composition of claim 1, wherein a volume concentration ratio of kaolin to alkaline earth metal carbonate ranges between 0.7:1 and 5:1.

15. The composition of claim 1, wherein a volume concentration ratio of kaolin to alkaline earth metal carbonate ranges between 1:1 and 3:1.

## Patentansprüche

1. Farb- oder Architekturbeschichtungszusammensetzung, umfassend einen Beschichtungsträger;
Kaolin mit einem d₅₀ von nicht mehr als 2 Mikrometer;
Alkalierdmetallcarbonat mit einem d₅₀ von nicht mehr als 2 Mikrometer; und geringer als 8 Gew.-% Titandioxid relativ zum Gewicht der Zusammensetzung.

2. Zusammensetzung gemäß Anspruch 1, wobei das Alkalierdmetallcarbonat mindestens eines aus Calciumcarbonat, Dolomit, Kalkstein, Kreide, Marmor, Bariumcarbonat und Magnesiumcarbonat umfasst.

3. Zusammensetzung gemäß Anspruch 2, wobei das Alkalierdmetallcarbonat Calciumcarbonat umfasst.

4. Zusammensetzung gemäß Anspruch 1, wobei die Zusammensetzung geringer als etwa 6 Gew.-% Titandioxid relativ zum Gewicht der Zusammensetzung umfasst.

5. Zusammensetzung gemäß Anspruch 1, wobei der Kaolin einen d₉₀ von geringer als 5 Mikrometer hat.

6. Zusammensetzung gemäß Anspruch 1, wobei der Kaolin einen d₉₀ von geringer als 2 Mikrometer hat.

7. Zusammensetzung gemäß Anspruch 1, wobei der Kaolin einen dₛₒ von geringer als 1 Mikrometer hat.

8. Zusammensetzung gemäß Anspruch 1, wobei der Kaolin einen d₅₀ von geringer als 0,5 Mikrometer hat.

9. Zusammensetzung gemäß Anspruch 1, wobei das Alkalierdmetallcarbonat einen d₉₀ von geringer als 5 Mikrometer hat.

10. Zusammensetzung gemäß Anspruch 1, wobei das Alkalierdmetallcarbonat einen d₉₀ von geringer als 2 Mikrometer hat.

11. Zusammensetzung gemäß Anspruch 1, wobei das Alkalierdmetallcarbonat einen d₅₀ von geringer als 1 Mikrometer hat.

12. Zusammensetzung gemäß Anspruch 1, wobei das Alkalierdmetallcarbonat einen d₅₀ geringer als 0,5 Mikrometer hat.

13. Zusammensetzung gemäß Anspruch 1, wobei das Alkalierdmetallcarbonat eine Steilheit im Bereich von 20 bis 40 hat.

14. Zusammensetzung gemäß Anspruch 1, wobei ein Volumen-Konzentrationsverhältnis von Kaolin zu Alkalierdmetallcarbonat im Bereich zwischen 0,7:1 und 5:1 liegt.

15. Zusammensetzung gemäß Anspruch 1, wobei ein Volumen-Konzentrationsverhältnis von Kaolin zu Alkalierdmetallcarbonat im Bereich zwischen 1:1 und 3:1 liegt.

## Revendications

1. Une composition de revêtement architectural ou de peinture contenant :
un véhicule de revêtement,
un kaolin présentant un d₅₀ inférieur à 2 microns,
un carbonate de métal alcalino-terreux présentant un d₅₀ inférieur à 2 microns ; et
moins de 8% en poids de dioxyde de titane par rapport au poids de la composition.

2. La composition selon la revendication 1, où le carbonate de métal alcalino-terreux contient au moins un élément parmi carbonate de calcium, dolomite, calcaire, craie, marbre, carbonate de baryum et carbonate de magnésium.

3. La composition selon la revendication 2, où le carbonate de métal alcalino-terreux contient du carbonate de calcium.

4. La composition selon la revendication 1, où la composition contient moins d'environ 6 % en poids de dioxyde de titane par rapport au poids de la composition.

5. La composition selon la revendication 1, où le kaolin présente un d₉₀ inférieur à 5 microns.

6. La composition selon la revendication 1, où le kaolin présente un d₉₀ inférieur à 2 microns.

7. La composition selon la revendication 1, où le kaolin présente un d₅₀ inférieur à 1 micron.

8. La composition selon la revendication 1, où le kaolin présente un d₅₀ inférieur à 0,5 micron.

9. La composition selon la revendication 1, où le carbonate de métal alcalino-terreux présente un d₉₀ inférieur à 5 microns.

10. La composition selon la revendication 1, où le carbonate de métal alcalino-terreux présente un d₉₀ inférieur à 2 microns.

11. La composition selon la revendication 1, où le carbonate de métal alcalino-terreux présente un d₅₀ inférieur à 1 micron.

12. La composition selon la revendication 1, où le carbonate de métal alcalino-terreux présente un d₅₀ moins de 0,5 micron.

13. La composition selon la revendication 1, où le carbonate de métal alcalino-terreux possède une pente située entre 20 et 40.

14. La composition selon la revendication 1, où un rapport de concentration en volume du kaolin sur le carbonate de métal alcalino-terreux se situe entre 0,7:1 et 5:1.

15. La composition selon la revendication 1, où un rapport de concentration en volume du kaolin sur le carbonate de métal alcalino-terreux se situe entre 1:1 et 3:1.
